(19) **Europäisches Patentamt / European Patent Office / Office européen des brevets**

(11) **EP 1 238 560 B1**

(12) **EUROPEAN PATENT SPECIFICATION**

(45) Date of publication and mention
of the grant of the patent:
**28.03.2012 Bulletin 2012/13**

(51) Int Cl.:
*H04W 72/10* (2009.01)   *H04W 4/06* (2009.01)
*H04W 84/04* (2009.01)

(21) Application number: **00987515.4**

(22) Date of filing: **14.12.2000**

(86) International application number:
**PCT/FI2000/001095**

(87) International publication number:
**WO 2001/045445 (21.06.2001 Gazette 2001/25)**

(54) **DYNAMIC CHANNEL ALLOCATION METHOD BASED ON PRIORITY**

AUF PRIORITÄT BASIERTES DYNAMISCHES KANALVERGABEVERFAHREN

METHODE D'ATTRIBUTION DYNAMIQUE DE CANAUX EN FONCTION DE LA PRIORITE

(84) Designated Contracting States:
**AT BE CH CY DE DK ES FI FR GB GR IE IT LI LU MC NL PT SE TR**

(30) Priority: **15.12.1999 FI 992695**

(43) Date of publication of application:
**11.09.2002 Bulletin 2002/37**

(73) Proprietor: **Nokia Corporation**
**02150 Espoo (FI)**

(72) Inventor: **MOISIO, Martti**
**FIN-02170 Espoo (FI)**

(74) Representative: **Antila, Harri Jukka Tapani et al**
**Kolster Oy Ab**
**P.O. Box 148**
**(Iso Roobertinkatu 23)**
**00121 Helsinki (FI)**

(56) References cited:
**EP-A1- 0 666 699     WO-A1-98/59517**
**US-A- 5 448 750     US-A- 5 504 939**

**Description**

FIELD OF THE INVENTION

The invention relates to dynamic channel allocation in a cellular radio network.

BACKGROUND OF THE INVENTION

In cellular radio networks data transmission resources administered by a network, for example an operator, are used for establishing a connection between terminals. In a radio interface the data transmission resources refer to a frequency band between a terminal, such as a mobile phone, and a base station. The frequency band available can be divided into physical data transmission resources i.e. channels in various ways, the most common thereof being Time Division Multiple Access (TDMA) and Code Division Multiple Access (CDMA). In systems based on TDMA the frequencies on the frequency band are divided into time slots, each one of which forms a channel when being periodically repeated. Then again, in systems based on CDMA all users communicate on the same frequency band that allows the users to be distinguished from one another using one or more spreading codes allocated for the connection.

The data transmission resources available to a single operator are in practice very limited regarding the number of users, and consequently the use of the available frequency band must be optimised reusing the frequencies in the network. This becomes possible, as the radio range of the base stations at a frequency only extends a certain distance, whereby the same frequency and the same channel can be reused in the network without causing excessive interference. In addition to reusing the same channels, the variety of the terrain and the use of the channel's adjacent channels cause interference to the channels. In the CDMA systems all connections use the same frequency, in which case the connections cause some interference to each other. The use of conceivably different spreading codes can minimize the interference.

The interference the mobile stations cause to one another can be eliminated in various ways in mobile systems. One significant way to reduce interference is network planning, which allows the available resources, such as radio channels, to be divided into base stations so as to minimize the interference the terminals communicating therein cause one another. The channel allocation between terminals distinguishes two principally opposing methods; the channels can either be fixedly divided between cells or alternatively the channels can be dynamically divided without exactly determining the available channels for the cells. Channel allocation can also be carried out using a hybrid method of the fixed and dynamic allocation.

Fixed Channel Allocation (FCA) is based on the fact that the available channels are permanently divided to cells on the basis of the predetermined traffic load of the cells. The method is particularly applicable to cellular radio systems composed of macro cells, in which systems the amount of traffic is relatively stable. To fixedly connect channels to cells is not preferable in cellular radio systems in which the traffic amount varies extensively, since the connection establishments occurring within the cell range may encounter congestion, even if the adjacent cells would have free data transmission resources available. The channel's borrowing methods allow to freely borrow channels from the neighbouring cells if the borrowed channel does not interfere with the ongoing connections. Access right to the borrowed channel is then prevented from several other neighbouring cells. In micro cell environments the allocation of data transmission resources frequently employs Dynamic Channel Allocation (DCA), in which case the channels and the cells are not fixedly dependent on one another. Any cell can use any channel as far as the interference levels of the channel remain within the allowed limits. The dynamic channel allocation is justified in a network with a small cell size, since a need for several cell changes may occur during the connections. In urban environments that often use micro cell networks the temporal and local fluctuations in traffic amounts can be very significant, and a temporary need for resources in any area may become extensive.

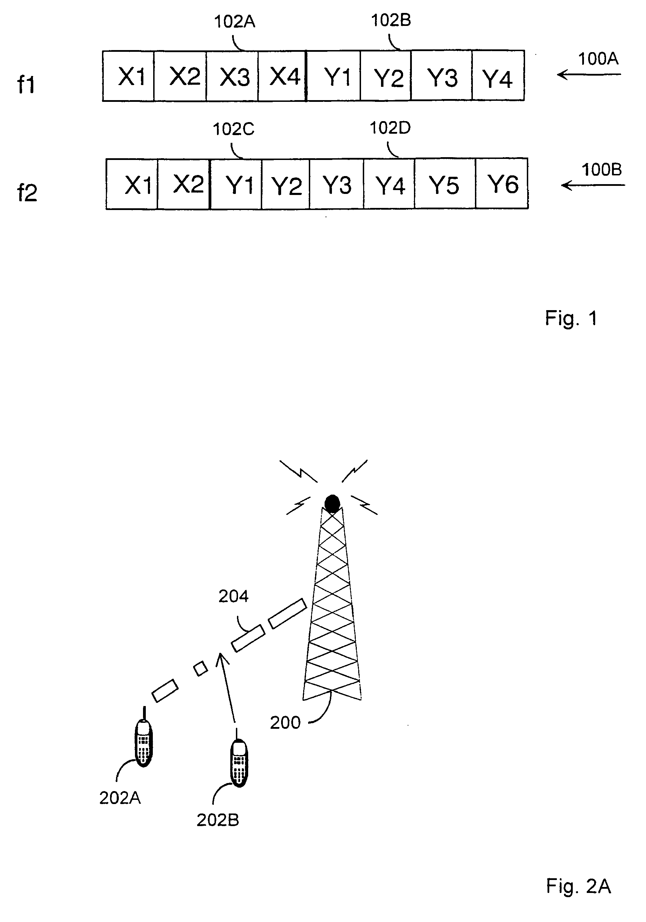

The DECT system, for example, employs a Minimum Interference (MI) method for channel allocation, where the base station searches an unused channel, which is mostly free from interference, for the terminal. The minimum interference method functions fairly well for homogeneous communication such as speech, whereby the interference caused to the neighbouring channels by the channel allocated for speech remains substantially equal. Bursty data traffic is in this respect more problematic, since the interference is extensive to the neighbouring connections when data is sent, whereas no interference is caused during quiet moments. Figure 2A shows two terminals 202A and 202B, which are within the coverage area of a base station 200. Bursty data 204 travels between the terminal 202A and the base station 200. In the situation shown in Figure 2A, the terminal 202B does not encounter interference from the channel at the time indicated by the arrow, when the terminal 202B listens to the terminal 202A communicating on the adjacent channel. In such a case, the terminal may reach disadvantageous conclusions when searching for the most interference-free channel, as a connection allocated for data traffic may temporarily be in such a mode, in which data does not move and interference is therefore not caused to the neighbouring connections.

Figure 1 discloses a system using Time Division Duplex (TDD), i.e. the uplink and downlink directions are implemented on the same frequency band, for example, so that some of the time slots are allocated to the uplink traffic and others to the downlink traffic. On a frame 100A shown at frequency f1, four time slots are allocated to the uplink direction X1 to X4 and four time slots Y1 to Y4 to the downlink direction. On a frame 100B shown at frequency f2, two time slots are allocated to the uplink direction X1 to X2 and six time slots Y1 to Y6 to the downlink direction. The Figure shows that for example the transmission on the uplink direction at frequency f1 in accordance with a time slot 102A is carried out simultaneously as the transmission of the downlink direction 102C at frequency f2. The above situation may occur, for example, when a user temporarily requiring a lot of data transmission capacity in the downlink direction operates at frequency f2. The situation illustrated in Figure 1 causes significant interference, when the terminals are located close to each other, for example, in a base station receiving the uplink transmission at frequency f1.

EP 0 666 699 discloses a mobile communication system with autonomous distributed type dynamic channel allocation scheme, in which each base station manages allocation priority levels for the available radio channels according to past record of channel use for each radio channel, and updates the allocation priority level of each radio channel by weighting past allocation accept/reject judgement results for each radio channel with weight factors which vary according to time intervals of the past allocation accept/reject judgement results from a current time. EP 0 666 999 discloses grouping of mobile stations to channel groups based on distance, moving speed and moving direction.

US 5,448,750 discloses a method for adaptively allocating channels for connections between base stations and mobiles. The channels accessible to the base stations for establishing connections with mobiles are ranked in at least one priority list based on transmission loss intervals.

The channel allocation scheme suggested by EP 0 666 699 has a problem that channels allocated to terminal groups may experience very different interference conditions.

BRIEF DESCRIPTION OF THE INVENTION

It is an object of the present invention to provide an improved channel allocation in a cellular radio network so as to solve the above problems. This is achieved according to Claim 1 with the method of the invention for implementing dynamic channel allocation in a cellular radio network. This method comprises the steps of grouping the terminals communicating over a radio connection with the base station of the cellular radio network into one or more terminal groups and forming a priority list for each terminal group of the radio channels in the cellular radio network from the highest quality channels as regards the terminal group, and allocating one or more radio channels from the channels on the priority list to the terminal if need be. The terminals are grouped into groups on the basis of location of the terminals.

The invention according to Claim 19 also relates to a controller in a cellular radio system comprising at least one base station and at least one terminal communicating over a radio connection with the base station and a controller for carrying out dynamic channel allocation in a cellular radio network. The controller included in the cellular radio system is arranged to group said one or more terminals communicating over a radio connection with the base station of the cellular radio system into one or more terminal groups, and the controller is arranged to form a priority list for each terminal group of the radio channels in the cellular radio network from the highest quality channels as regards the terminal group, and to allocate one or more radio channels from the channels on the priority list to the terminal if need be. The terminals are grouped into groups on the basis of location of the terminals.

The invention also relates to a cellular radio network said controller, according to Claim 32.

The invention according to Claim 36 further relates to a computer program product encoding a computer program of instructions for executing a computer process for carrying out dynamic channel allocation in a cellular radio network comprising at least one base station and at least one terminal communicating over a radio connection with the base station, the process comprising steps of grouping the terminals communicating over a radio connection with the base station of the cellular radio network into one or more terminal groups, forming a priority list for each terminal group of the radio channels in the cellular radio network from the highest quality channels as regards the terminal group, and allocating one or more radio channels from the channels on the priority list to the terminal. The terminals are grouped into one or more terminal groups on the basis of the location of the terminals.

The preferred embodiments of the invention are disclosed in the independent claims.

The radio network preferably refers to a mobile network, which allows the radio channels to be dynamically allocated to the terminals. The invention can be applied to digital mobile networks without being restricted to a multiple access method of the mobile network, for example. The invention is preferably applicable to a mobile network using time division duplex TDD, but the invention is not restricted thereto and is applicable to other radio networks as well, which use frequency division duplex FDD. The terminal is preferably a mobile phone but can be any apparatus comprising a radio transmitter and a receiver and located in the coverage area of the radio network. Examples of such apparatuses are computers, household appliances and the like.

In the invention, the terminals located within the range of the radio network base station are divided into groups on the basis of location information, in which case the terminals located in the same range are preferably grouped into the same group. The terminal groups may vary in size, and the smallest groups comprise only one terminal and the largest groups comprise all the terminals in a particular coverage area. A particular number of channels divided into priority and candidate channels is thus allocated for each terminal group formed from the channel space available to the base station. Candidate channels, or standby channels, can be used, for example, in situations, where the terminals require more radio channel capacity. A standby channel can also be taken into use, when the channel on the priority list encounters significant interference from the surrounding channels, and the use thereof is stopped. The transfer of channels between the priority list and the standby list is made slow, in which case the interference experienced by the terminal group remains stable.

In accordance with an embodiment of the invention, a priority list is formed of radio channels, which are to be allocated for each terminal group, to both uplink and downlink directions. The radio channels are preferably arranged in order of superiority on the priority list on the basis of the priority value. The priority value is increased if the terminal reports that the channel is of good quality, whereas the priority value is reduced if the terminal reports that the channel is of poor quality. The good quality of the channel can be solved for example by setting threshold values to the variables, such as the Negative ACKnowledgement (NACK) of the packets, the Cyclic Redundancy Check (CRC) or the Signal-to-Interference ratio (SIR). The channels on the priority list are therefore preferably arranged in order of superiority according to the measurement results regarding the use of the channels. Furthermore, according to a preferred embodiment the channels are arranged in order of superiority so that the uplink channels are arranged in accordance with the measurements performed by the base station, and the downlink channels are arranged in order of superiority in accordance with the measurements performed by the terminal. When the terminal establishes a data transmission connection through the cellular radio network, one or more of the best channels on the priority list of said terminal group is allocated to the terminal in accordance with a preferred embodiment. A Quality of Service criterion can also be used in allocation, whereby a channel corresponding to the QoS classification is allocated to the terminal. A user paying significantly for his connections could in such a case obtain better channels than a user paying less for his connections.

According to a preferred embodiment of the invention, candidate lists are maintained for each terminal group in the uplink and downlink directions for the above priority lists. The candidate list includes in order of superiority channels that provide, if necessary, a supplement for the priority list channels. The channels on the candidate list can also replace such priority list channels, whose quality level, or priority value, decreases below a predetermined threshold value. According to a preferred embodiment of the invention the channels on the candidate list are arranged in order of superiority on the basis of signal strength measurements, or reception power measurements, performed in the available time slots. In such a case, interference strength is measured, for example, from channels adjacent to an available time slot. The uplink measurements are carried out in the base station, whereas the downlink measurements are carried out in the terminal. The terminals signal the measurement results to the base station, where the priority and candidate lists are maintained in a preferred embodiment of the invention. The invention is not restricted to maintaining said lists in the base station, but the lists can also be implemented in, for example, the base station controller or in another corresponding cellular radio network part. Preferably the base station controls the measurements of the terminals in a particular terminal group so as to maximize the number of measurements performed by the terminal group. The base station thus co-ordinates for instance the fact that two terminals belonging to a particular terminal group do not simultaneously measure the same channel.

In one embodiment, owing to an insignificant amount of variation between the priority list and the candidate list, the solution is well suitable for transmitting traffic in packet form. Then the interference measurements to be performed for different channels are carried out in the long run, and the temporarily quiet interference channels are not easily allocated for use.

One embodiment of the invention also allows to properly allocate temporarily greater bandwidths for asymmetrical connections in cellular radio networks using time division duplex (TDD). In general, the problem with asymmetrical connections is that a time slot allocated in the uplink direction of a frequency can be a time slot allocated to the downlink direction of an adjacent frequency. Channels suffering from asymmetry obtain poor measuring reports during use and can be rapidly transferred from the priority list.

The solution of the invention provides an advantage. Since the mobiles are grouped based on their location, the interference encountered by the terminals located close to one another on different radio channels are near one another.

BRIEF DESCRIPTION OF THE DRAWINGS

In the following the invention will be described in greater detail by means of the preferred embodiments with reference to the attached drawings, in which

Figure 1 shows how two adjacent frequencies overlap in relation to the time slots in the uplink and downlink directions,
Figure 2A shows two terminals located in the base station area, one of the terminals communicates in the direction of the base station using bursty data traffic,
Figure 2B shows a mobile network,

Figures 3A-3C are a flow chart showing a method of the invention,

Figure 4 schematically shows the channel division of the invention,

Figure 5 shows how the terminals are grouped on the basis of propagation losses, and

Figure 6 shows a preferable embodiment of an apparatus arrangement of the invention.

## DETAILED DESCRIPTION OF THE INVENTION

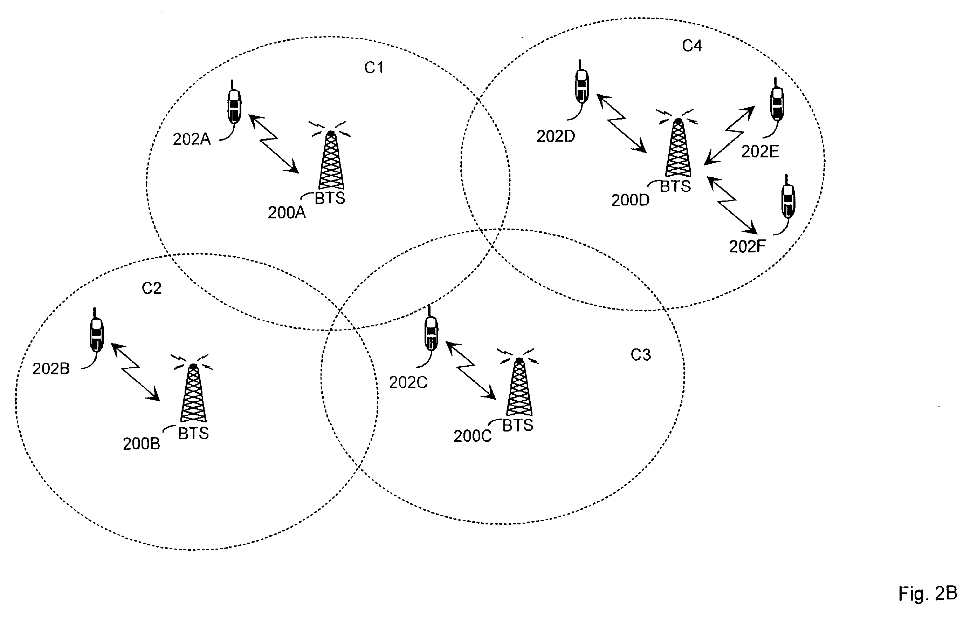

In the following the invention will be described in greater detail with reference to the appended Figures 1 to 9, and in the specification by means of a cellular radio network employing mainly CDMA, however, without being restricted thereto. Figure 2B is a broad description of a mobile system comprising base stations 200A to 200D. The coverage area of the base station is referred to as a cell indicated by C1 to C4 in the Figure and corresponding to base station 200A to 200D. The cells may overlap and extend over each other; cell C2 partly overlaps cells C1 and C3 in the Figure. One or more mobile stations 202A to 202F are described in the Figure within the area of each cell C1 to C4. The mobile stations are, for example, mobile phones but can also be other apparatuses, such as computers, household appliances or the like provided with radio receiver and/or transmitter properties. In a radio network employing a code division multiple access method, such as a mobile network, all users employ the same frequency band simultaneously. Several practical applications, also adjacent cells like the cells C1 to C4 presented in Figure 2B, employ the same frequency band.

The information sent to the radio channel is multiplied by a spreading code, thus spreading relatively narrowband information over a broad frequency band. Each connection is provided with a specific spreading code or spreading codes enabling the receiver to identify transmissions intended thereto. The spreading codes of the users tend to be orthogonally selected; and thus avoiding correlation with one another. In practice, the spreading codes are not completely orthogonal with each other, and therefore the users interfere with one another. In Figure 2B, the receivers 202D to 202F interfere with one another and experience interference from the terminals 202A to 202C located within the area of the other cells C1 to C3. Interference is also created between the terminals 202A to 202F, when a signal sent by each terminal propagates along various paths to the receiver. This, so-called multi-path propagation leads to the fact that the user signal arrives at the receiver as a component delayed in various ways, thus causing interference to other users.

The information transmitted between the base stations 200A to 200D and the terminals 202A to 202F is carried out using a bi-directional radio connection by means of radio channels. The uplink direction refers to the information flow directed from the terminal to the base station, whereas the downlink direction refers to a transmission directed from the base station to the terminal. The uplink and downlink directions can be distinguished in the CDMA, for example, using Frequency Division Duplex (FDD), in which case the uplink and downlink directions are in different frequency areas, or using Time Division Duplex (TDD), in which case the transmission directions are temporally distinguished from one another. For example, the FDD mode of UMTS employs the following channels: A DCH is used both for the uplink and downlink directions for conveying user and control information between the base stations 200A to 200D and the terminals 202A to 202F. A BCH (Broadcast Channel) is used in the downlink direction for conveying information to the terminals from the cell and a PCH (Paging Channel) is used for requesting location data from the terminal, when the system does not know the location of the terminal. A FACH (Forward Access Channel) is used for transmitting information to the terminal, when the base station knows the location of the terminal and a RACH (Random Access Channel) can be used in order for the terminal to convey control information in the uplink direction for example to establish a connection, and a SCH (Synchronization Channel) can be employed in order for the system to convey synchronization information to the terminal. A Downlink Shared Channel (DSCH) is particularly suitable for conveying data traffic. Said channel can be used for sending control and trafficking information intended for several terminals. Some radio channels have been presented above by way of example, and as to the invention the presentation of all chan-nels is not relevant in this context. The transmission on the radio channels is carried out in bursts of a specified form including for example pilot symbols, user data and control information. The pilot symbols are frequently placed in the middle of the burst, thus describing to best possible effect the distortions caused by the radio channel to the entire user data in the burst. The pilot symbols are a set of symbols known by both the terminals 202A to 202F and the base stations 200A to 200D. Based on the pilot symbols, the party receiving the burst, forms an impulse response of the channel in order to clarify the strengths and delays of the multi-path propagated components. On the basis of the impulse response a finger branch is allocated for the best signal components in the receiver, for example in a RAKE receiver. The channel estimation information thus obtained from the pilot symbols is utilized in the receiver for interference cancellation; the information is intended to remove interference from the received user signals, in which case the information sent by the transmitter can be received as correctly as possible.

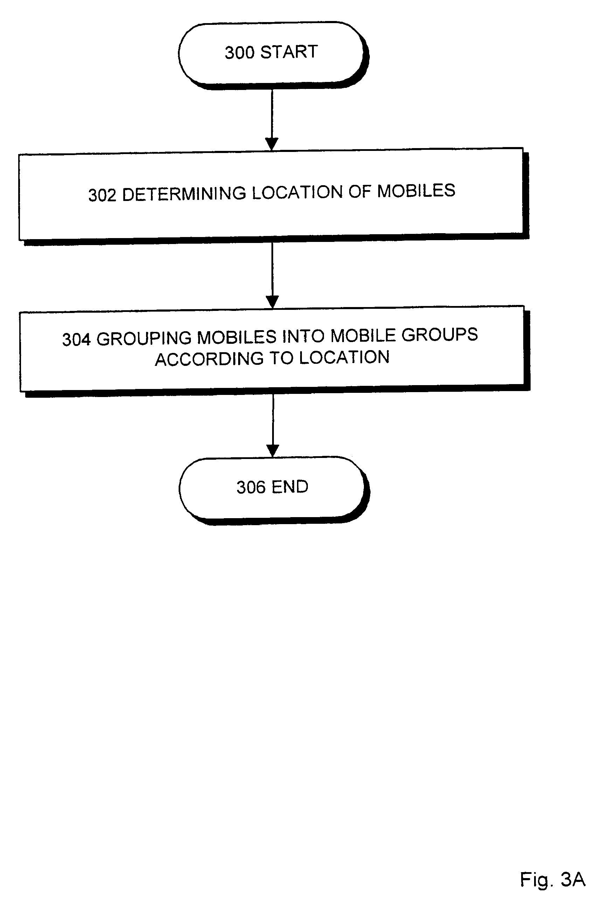

Figures 3A to 3C illustrate the method of the invention by means of a preferred embodiment. Figure 3A shows how the terminals are grouped into terminal groups. In starting step 300 of the method, no terminals are placed in the coverage area of the radio network, but they start to appear to the cellular radio network area. The cellular radio network, such as a mobile network, measures the locations of the terminals within the cellular radio network area using a known method. The location is determined in the GSM system for example using a triangulation technique, in which the terminal determines the Timing Advance (TA) in relation to three different base stations. The timing advance allows to determine the distance to each base station within the accuracy of about 550 meters, corresponding to the propagation distance of light during the transmission of one single bit. The GPS (Global Positioning System) offers a more accurate location determination and enables to determine the location with the accuracy of meters or even centimetres. In such a case, the cellular radio network forms in accordance with step 304 a terminal group of the terminals within the same area, and the cellular radio network allocates a particular set of radio channels for each group. When the terminals are positioned into terminal groups according to the location thereof, a terminal arriving later at a corresponding area can be located into the same group with the other terminals in the area. As the terminal travels in the cellular radio network into the area of another terminal group, the terminal is preferably transferred into the terminal group, to which area the terminal has moved. In a preferred embodiment of the invention, there are no limitations concerning the number of terminal groups to which the terminal may belong. For example, when the terminal moves in an area corresponding to the areas of two terminal groups, the terminal may belong to both terminal groups and obtain from there channels into use.

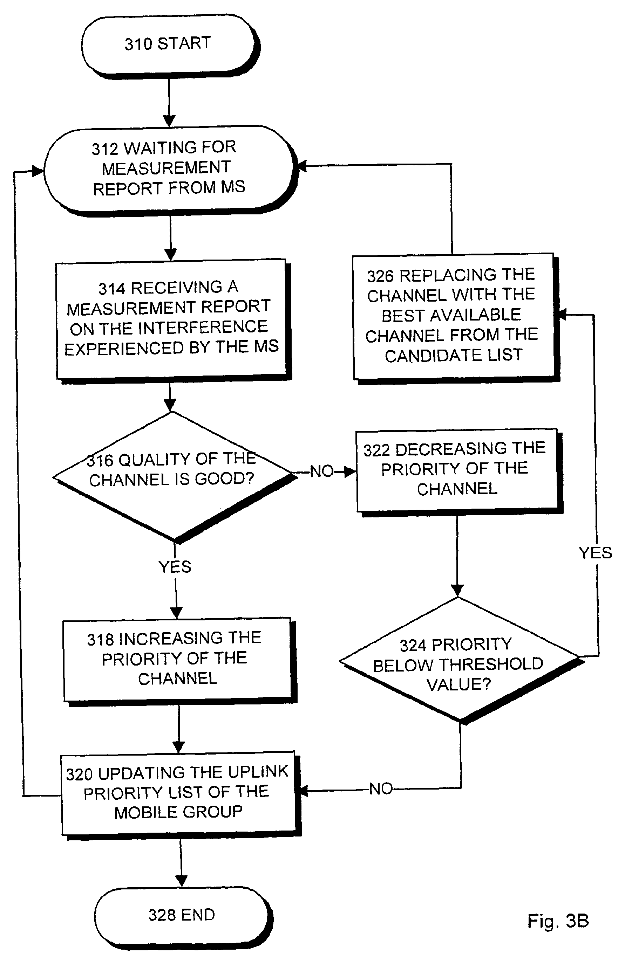

Figure 3B explains how an uplink priority list according to a preferred embodiment is maintained. Terminals have communicated within the mobile network in starting step 310 of the method, and therefore measurement information on the interference experienced by the terminals is available. In step 312 the base station waits for the measurement results from the terminals, which have established through the base station a connection to another terminal located within the cellular radio network area or outside the area. In order to maintain the priority list the base station preferably utilizes the measurement reports sent by the terminals concerning the interference experienced by the terminals on the connection used. In step 314 the base station receives a measurement report sent by the terminal. Several measurement reports are sent repeatedly, for example periodically, during a connection. The measurement report can be based on for example Negative ACKnowledgements (NACK) i.e. the number of data packets intended for the terminal that the terminal is likely to reject on account of transmission errors that occur during data transmission from the base station to the terminal. The terminal may report about the good quality of the connection according to the Cyclic Redundancy Check (CRC), signal-to-interference ratio or to another corresponding criterion.

In step 316 the quality of the connection used is evaluated and if the terminal reports that the connection is good, for example exceeds a particular threshold value, the base station increases in step 318 the priority of said channel in accordance with formula (1), where P depicts the channel priority and N the number of measurements. P can obtain values ranging between 0 and 1 and 1 can be used as the initial value.

$$(1) \quad P_{i+1} = \frac{P_i \times N_i + 1}{N_i + 1}$$

N describing the number of measurements is increased in accordance with formula (2). Preferably an upper limit or a certain time limit is determined for N, in which case it is zeroed. Otherwise N may increase into such a proportion that the new measurement results do not affect the value of P.

$$(2) \quad N_{i+1} = N_i + 1$$

If the terminal sends a report concerning the measured channel, according to which report the used channel is a poor quality channel, then the priority value thereof is reduced in step 322 in accordance with formula (3). In this case too, the value of N is increased in accordance with formula (2).

$$(3) \quad P_{i+1} = \frac{P_i \times N_i}{N_i + 1}$$

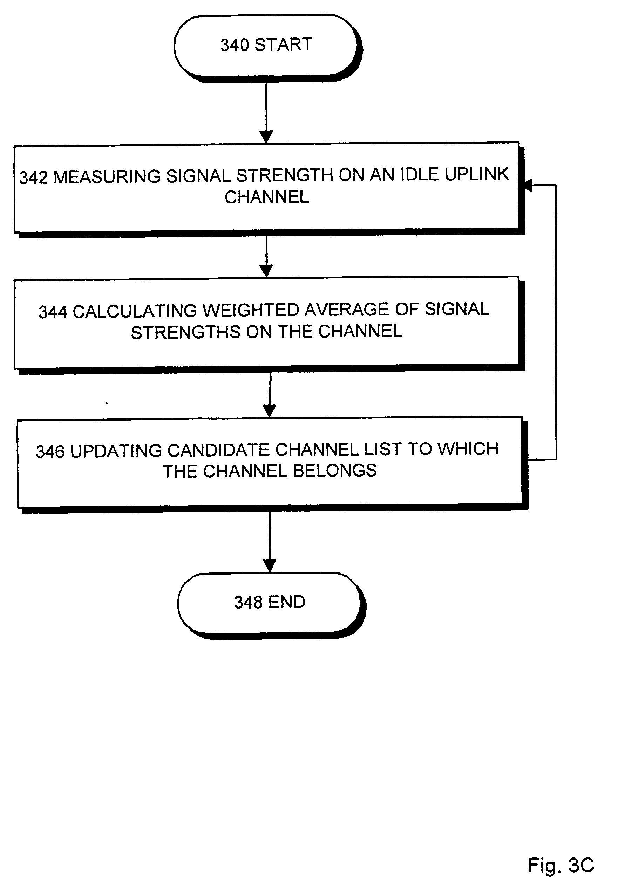

Since the priority list stores the best channels available to the terminal group, a threshold value is preferably set for the priority list channels, which is checked in step 324. If the priority value goes below the threshold value, the channel is removed from the priority list in accordance with step 326 and is preferably replaced with the best channel on the candidate list. In table 1, if the threshold value of the priority channels, the channel being removed from the priority list if it goes below the threshold value, is for example 0.40, then channel (906,6;8) is removed from the priority list as the priority value is reduced to 0.38. In such a case, the channel (906,6;8) is replaced with the best possible channel on the downlink candidate list of the terminal group of said terminal group, and channel (906,6;8) is transferred to the candidate list. How to use the candidate list is explained in greater detail in Figure 3C.

Table 1 presents an example of the contents in a priority list of one terminal group. The table comprises a column describing the order in which value 1 depicts the best channel and an increase in the consecutive number signifies a channel decrease. The radio resource to be used is determined in column "channel", as in table 1 the radio resource is shown using the GSM system. For example, the best channel with the consecutive number 1 is the third time slot at frequency 910.2 MHz. The column "priority" is calculated according to formula 1 or 3, and the number of measurement reports needed in formulas 1, 2 and 3 is maintained in column "index". Column "mode" depicts the mode of the channel, i.e. whether the channel is occupied of free. In accordance with method step 320 the priority list of the terminal group is updated always when a measurement report concerning channel quality is obtained from the terminal. The priority list illustrated in table 1 shows an example of a priority list of a terminal group, but it is obvious that all terminal group priority lists can be combined so as to add a column to table 1 identifying the terminal group. The maintenance of a downlink priority list is described above. The maintenance of an uplink priority list is carried out in a preferred embodiment in the same way as described above, except that the base station performs the channel quality measurements instead of the terminal. When the terminal requires radio resources from the cellular radio network, channels are allocated from the priority list. According to a preferred embodiment the best available channel is allocated from the priority list of the terminal group of the terminal. In accordance with another preferred embodiment a QoS criterion is used in allocation, i.e. the user with a higher quality classification may employ better channels than a user with a lower quality classification.

Table 1. Priority list

| Order | Channel (frequency, time slot) | Priority, P | Index, N | Mode |
|---|---|---|---|---|
| 1 | (910,2; 3) | 0,92 | 1524 | MS#2 |
| 2 | (898,8; 6) | 0,84 | 1035 | Idle |
| 3 | (894,4; 4) | 0,82 | 687 | MS#1 |
| 4 | (902,6; 2) | 0,77 | 3562 | Idle |
| 5 | (911,4; 1) | 0,72 | 4214 | Idle |
| 6 | (906,6; 8) | 0,38 | 269 | Idle |

Figure 3C shows an example of how the uplink candidate list is maintained in a method step form. In starting step 340 of the method, the cellular radio network area comprises terminals grouped into terminal groups on the basis of the location of the terminals, for example. A priority list is allocated for each terminal group and comprises the best channels available to be used by the terminal group. According to a preferred embodiment, a candidate list is allocated to the priority list channels. Spare channels replacing a priority list channel if necessary are stored onto the candidate list. According to a preferred embodiment the channels on the candidate list are arranged in order of superiority based on the measurements performed in the idle mode. Here, quality refers to signal strength measurements, for example. In the uplink direction the base station performs the measurements in accordance with step 342, whereas in the downlink direction the terminals perform the measurements and signal the measurement results to the base station. The base station preferably controls the function of the terminal so that two terminals belonging to the same group do not measure the same channel. Table 2 shows an example of a candidate list of a terminal group. The column "order" illustrates the order of superiority of the channels in the same way as in the priority list, and column "channel" the physical definition of the channel. Column "quality" is preferably the weighted average to be calculated for example in method step 344 concerning the signal strengths of the measurements performed for the channel. The signal strength is preferably measured from the idle time slots, in which case a higher signal strength indicates higher interferences and therefore poorer quality. When calculating the weighted average, the most recent measurements can for example be weighted more than old measurement results. The weighting factor can then be for instance a linearly falling straight.

Table 2. Candidate list

| Order | Channel | Quality |
|---|---|---|
| 1 | (912,4; 1) | 92 |
| 2 | (896,0; 4) | 88 |
| 3 | (884,6; 5) | 75 |

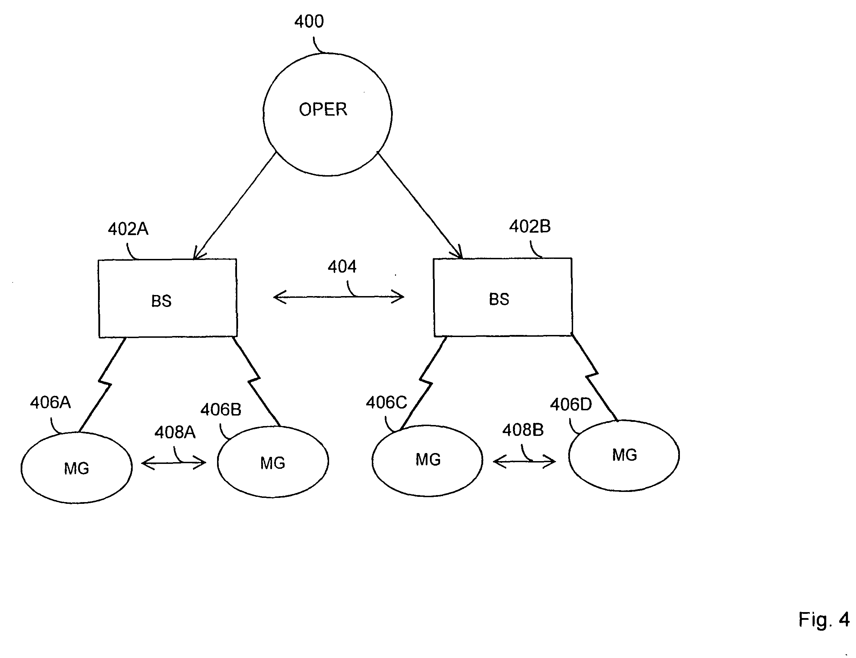

Figure 4 shows how the channels are used, for example, in a single operator network. A hierarchy element 400 on top illustrates the channel space used by the operator. The channel space of the operator is divided into base stations by means of network planning. When using fixed channel allocation FCA, each base stations is provided with particular channels taking the reuse into account. Thus, for instance, two adjacent base stations may use the same channel, but the sectoring of base stations tend to reduce the interference the users operating on the channels cause one another. Here, sectoring refers to the base stations sending the same channel into different directions. A second level 402A and 402B of the hierarchy shows the channel sets allocated to the base stations. The channel sets available to the base stations may be fixed or the channels may vary dynamically between the base stations, as illustrated by line 404. The dynamic channel allocation between base stations can be employed for example in significant loading and interference situations. The lowest level in the hierarchy shown in Figure 4 illustrates the terminal groups formed of the terminals within the coverage area of the base stations. The terminals in the base station 402A area form two terminal groups 406A and 406B, and the terminals in the base station 402B area form two terminal groups 406C and 406D. The channel set of the terminal group 404A refers to channels, which are placed on the priority and candidate lists of the terminal group. The base station channels 402A can also be fixedly and dynamically allocated between the terminal groups 404A to 404B. Lines 408A and 408B show how the channels can be transferred dynamically between the terminal groups 404A and 404B within the influence area of the base station. In practice, the fact that the channels between the base stations can be dynamically transferred in accordance with the connection 404 indirectly also indicates that the channels are able to be transferred dynamically between the terminal groups of the different base stations, for example between terminal groups 404B and 404C.

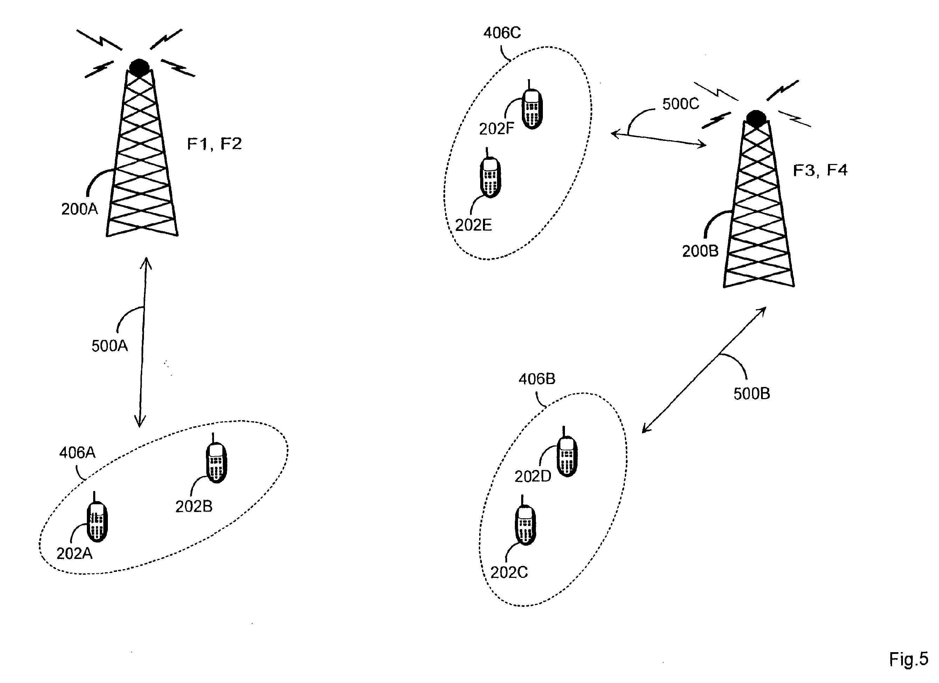

Figure 5 shows how the terminals are grouped based on the location thereof. The Figure illustrates two base stations 200A and 200B. The base station 200A serves two terminals 202A to 202B, which are located substantially within the same area at a distance 500A, thus forming the terminal group 406A. The base station 200A has in the example shown in Figure two frequencies F1 and F2 in use, when the TDMA system is concerned. The base station 200B serves four terminals 202C to 202F, whereof 202C to 202D are located substantially within the same area at a distance 500B, thus forming the terminal group 406B. The terminals 202E to 202F are placed at a distance 500C, thus forming the terminal group 406C. The base station 200B may use two frequencies F3 and F4 in the example shown in Figure 4, when the TDMA system is concerned. Two frequencies are allocated for both base stations 202A and 202B, even though the base station 202B serves several users. In a cellular radio network, for example in a base station controller, the radio channels may be allocated in advance to the terminal groups so that certain terminal groups have more capacity in the downlink direction than other terminal groups. For example in Figure 5, the terminal group 400C might include several channels in the downlink direction. In such a case, the terminal 202E arriving at close range to the base station 200B and requiring a lot of capacity in the downlink direction could be placed in the group 406C. Consequently, the problem concerning a terminal group comprising terminals that simultaneously communicate in both uplink and downlink directions can be reduced. In such a situation the terminal communicating in the uplink direction can for example increase the transmission power, and thus complicate the reception of the terminal receiving in the downlink direction. In another embodiment, preplanning between uplink and downlink channels is not carried out between the base stations. However, then the channels having problems caused by asymmetry, obtain poor measurement results during the measurements carried out during use and idle time slots, and are therefore not easily allocated for use. In a preferred embodiment, when a new terminal enters the group, for example 202B arrives substantially into the area of group 406A, the cellular radio network determines the location of the terminal. The location can be determined for example on the basis of a burst sent on a random access channel RACH. The burst is analyzed in three different base stations and a triangulation method is employed for determining the position of the terminal. The terminals report in turn the serving base stations about the control signal strengths received from all surrounding base stations. In order to maintain the measurement reports required for maintaining the priority and candidate lists, the terminal signals in a preferred embodiment with a cellular radio network control channel.

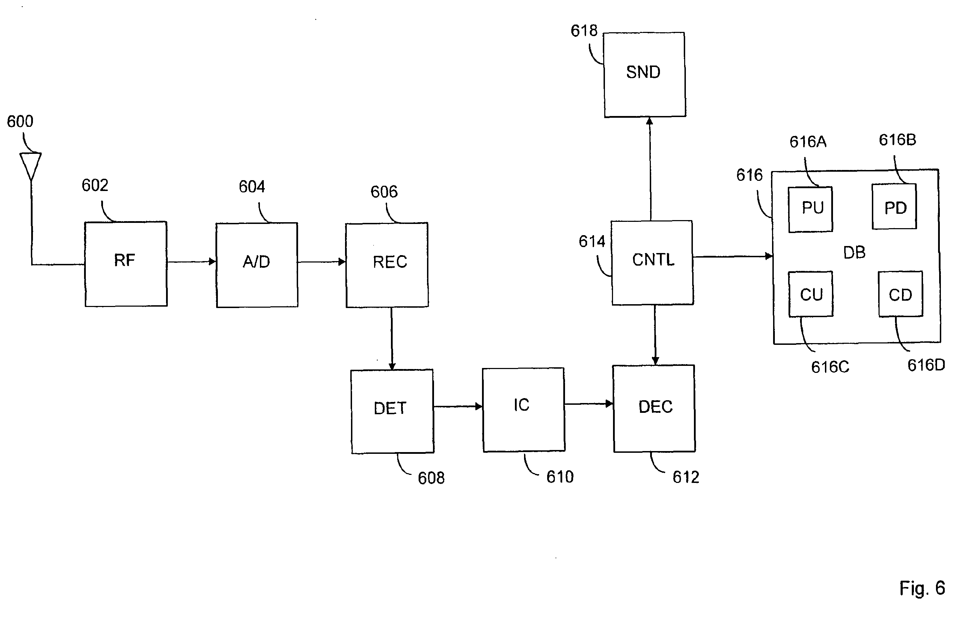

Figure 6 describes a preferred embodiment of a receiver of the invention. The receiver comprises one or more antennas 600 for receiving a broadband combination signal. After the radio frequency parts 602 the signal is directed to an analogue-digital converter 602, in which the analogue signal is converted into digital mode and sampled. Each user's multipath-propagated components and the delay thereof are searched for from the broadband signal in a receiver unit 604. A Matched Filter (MF) is, for instance, used for retrieving the signal components. The signal power can be determined at different delays by sliding said filter in relation to the received signal. In a preferred embodiment the receiver is a CDMA receiver of RAKE type, in which the best components with different delays are directed to different RAKE branches for receiving user signals. One RAKE branch includes for example a detection stage 608, in which the received combination signal is correlated with the user despreading code, when the user signal can be distinguished from the combination signal. In the detection stage 608 the initial symbol estimates are formed from the user signal. The symbol estimates are improved in one or more interference cancellation stages 610, and as an output thereof the final symbol estimates of the symbols sent by the user are obtained. The symbols thus detected are applied to decoding 612, where the interleaving and channel coding performed for the user signals are released. The channel coding release results in obtaining information concerning the received signal about the quality of the radio channel used, for example. The decoding routine 612 provides a connection to a controller 614 of the invention, to which the method steps of the invention in a preferred embodiment presented in Figures 3 to 5 are implemented. The method steps are implemented to the controller 614 preferably as software for a general-purpose processor, but can also be implemented as an ASIC (Application Specific Integrated Circuit) or by a separate logic component. The controller 614 also communicates with a database 616, in which the priority and candidate lists are stored for example as indexed tables. The tables can be formed for example so as to provide each user group with a specific uplink priority list 616A, a specific downlink priority list 616B, a specific uplink candidate list 616C and a specific downlink candidate list 616D. Obviously, for example the uplink candidate lists of all user groups can also be implemented in a single uplink candidate list 616C. The controller also communicates with a transmitter unit 618, through which the channels on the channel lists are allocated to the users. The transmitter unit comprises substantially corresponding apparatus parts as the presented receiver parts 600 to 612, but the description thereof is not essential in this context. It is obvious that the receiver comprises other apparatus parts in addition to the ones described in Figure 6 but the description thereof is not relevant regarding the invention.

Even though the invention has above been explained with reference to the example in the accompanying drawings, it is obvious that the invention is not restricted thereto but can be modified in various ways within the scope of the attached claims.

## Claims

1. A method for carrying out dynamic channel allocation in a cellular radio network comprising at least one base station (200A to 200B) and at least one terminal (202A to 202F) communicating over a radio connection with the base station (200A to 200B), the method comprising:

   grouping the terminals (202A to 202F) communicating over a radio connection with the base station (200A to 200B) of the cellular radio network into one or more terminal groups (406A to 406C),
   forming a priority list (616A to 616B) for each terminal group (406A to 406C) of the radio channels in the cellular radio network from the highest quality channels as regards the terminal group (406A to 406C), and allocating one or more radio channels from the channels on the priority list (616A to 616B) to the terminal (202A to 202F), **characterized in that** the terminals are grouped into one or more terminal groups on the basis of the location of the terminals (202A to 202F).

2. A method as claimed in claim 1, **characterized by** forming the priority list (616A to 616B) for each terminal group (406A to 406C) in the uplink and downlink direction.

3. A method as claimed in claim 1, **characterized by** forming a candidate list (616C to 616D) for each terminal group (406A to 406C) for maintaining one or more candidate radio channels.

4. A method as claimed in claim 3, **characterized by** forming a candidate list (616C to 616D) for each terminal group (406A to 406C) in the uplink and downlink direction.

5. A method as claimed in claim 3, **characterized by** arranging the radio channels maintained on the uplink candidate list (616C) on the basis of the reception power into an order of intensity, the reception power being measured in the base station (200A to 200B) of the cellular radio network.

6. A method as claimed in claim 3, **characterized by** arranging the radio channels maintained on the uplink candidate list (616C) on the basis of the reception power into an order of intensity, the reception power being measured in one or more terminals (202A to 202F).

7. A method as claimed in claim 1, **characterized by** maintaining the priority list (616A to 616B) of the terminal group (406A to 406C) in the base station (200A to 200B) of the cellular radio network.

8. A method as claimed in claim 3, **characterized by** maintaining the candidate list (616C to 616D) of the terminal group (406A to 406C) in the base station (200A to 200B) of the cellular radio network.

9. A method as claimed in claims 1 and 4, **characterized by** replacing the radio channel to be removed from the priority list (616A to 616B) with the best channel on the candidate list (616C to 616D).

10. A method as claimed in claims 1 and 4, **characterized by** moving one or more radio channels from the candidate list (616C to 616D) to the priority list (616A to 616B) in order to increase the number of available radio channels.

**11.** A method as claimed in claim 1, **characterized by** storing one or more radio channels of the highest quality on the priority list (616A to 616B) based on the measurement report obtained regarding the use of the radio channel.

**12.** A method as claimed in claim 11, **characterized by** forming the measurement report of the uplink radio channel in the base station (200A to 200B).

**13.** A method as claimed in claim 11, **characterized by** forming the measurement report of the downlink radio channel in the terminal.

**14.** A method as claimed in claim 11, **characterized by** forming a measurement report based on the negative acknowledgements (NACK) of the packets to be sent on the radio channel.

**15.** A method as claimed in claim 11, **characterized by** forming a measurement report based on the signal-to-interference ratio (SIR) of the radio channel.

**16.** A method as claimed in claim 11, **characterized by** forming a measurement report based on the cyclic redundancy check (CRC).

**17.** A method as claimed in claim 11, **characterized by** forming an evaluation on the basis of the measurement report whether the radio channel employed is good or poor and calculating on said basis a priority value for the channel using the formula $P_{i+1} = \dfrac{P_i \times N_i + 1}{N_i + 1}$, where P depicts the channel priority value and N the number of measurement reports and I the consecutive number of the priority value and the measurement report.

**18.** A method as claimed in claim 11, **characterized by** setting a threshold value for the priority value and removing the channel from the priority list (616A to 616B) whose priority value decreases below the threshold value.

**19.** A controller for carrying out dynamic channel allocation in a cellular radio system comprising at least one base station (200A to 200B) and at least one terminal (202A to 202F) communicating over a radio connection with the base station (200A to 200B) the controller (614) included in the cellular radio system comprising:

means for grouping said one or more terminals (202A to 202F) communicating over a radio connection with the base station (200A to 200B) of the cellular radio system into one or more terminal groups (406A to 406C),
means for forming a priority list (616A-616B) for each terminal group (406A to 406C) of the radio channels in the cellular radio network from the highest quality channels as regards the terminal group (406A to 406C), and
means for allocating one or more radio channels from the channels on priority list (616A to 616B) to the terminal (202A to 202F),
**characterized in that** the grouping means is configured to group the one or more terminals into one or more terminal groups on the basis of location of the terminals (202A to 202F).

**20.** A controller as claimed in claim 19, **characterized in that** the controller (614) comprises means for forming a priority list (616A to 616B) for each terminal group (406A to 406C) in the uplink and downlink directions.

**21.** A controller as claimed in claim 19, **characterized in that** the controller (614) comprises means for forming a candidate list (616C to 616D) for each terminal group (406A to 406C) for maintaining one or more candidate radio channels.

**22.** A controller as claimed in claim 21, **characterized in that** the controller (614) comprises means for forming a candidate list (616C to 616D) for each terminal group (406A to 406C) in the uplink and downlink directions.

**23.** A controller as claimed in claim 21, **characterized in that** the controller (614) comprises means for arranging the radio channels maintained on the uplink candidate list (616C) on the basis of the reception power into an order of intensity, wherein the base station (200A to 200B) of the cellular radio network comprises means for measuring the reception power.

**24.** A controller as claimed in claim 21, **characterized in that** the controller (614) comprises means for arranging the radio channels maintained on the downlink candidate list (616D) on the basis of the reception power into an order of intensity, and the reception power is measured in one or more terminals (202A to 202F).

25. A controller as claimed in claim 21, **characterized in that** the base station (200A to 200B) comprises means for maintaining the priority list (616A to 616B) of the terminal group (406A to 406C).

26. A controller as claimed in claim 21, **characterized in that** the base station (200A to 200B) comprises means for maintaining the candidate list (616C to 616D) of the terminal group (406A to 406C).

27. A controller as claimed in claims 19 and 21, **characterized in that** the controller (614) comprises means for replacing the radio channel removed from the priority list (616A to 616B) with the best channel on the candidate list (616C to 616D).

28. A controller as claimed in claims 19 and 21, **characterized in that** the controller (614) comprises means for moving one or more radio channels from the candidate list (616C to 616D) to the priority list (616A to 616B) in order to increase the number of available radio channels.

29. A controller as claimed in claim 19, **characterized in that** the controller (614) comprises means for maintaining one or more radio channels of the highest quality on the priority list (616A to 616B) on the basis of the measurement report obtained regarding the use of the radio channel.

30. A controller as claimed in claim 29, **characterized in that** the controller (614) comprises means for forming an evaluation on the basis of the measurement report whether the radio channel employed is good or poor and means for calculating on said basis a priority value for the channel using the formula $P_{i+1} = \dfrac{P_i \times N_i + 1}{N_i + 1}$, where P depicts the channel priority value and N the number of measurement reports and i the consecutive number of the priority value and the measurement report.

31. A controller as claimed in claim 30, **characterized in that** the controller (614) comprises means for setting a threshold value for the priority value and means for removing the channel from the priority list (616A to 616B) whose priority value decreases below the threshold value.

32. A cellular radio network, comprising a controller as claimed in claim 29 and a base station, wherein the base station (200A to 200B) comprises means for forming the measurement report of the uplink radio channel.

33. A cellular radio network as claimed in claim 32, wherein the measurement report is based on the negative acknowledgements (NACK) of the packets to be sent on the radio channel.

34. A cellular radio network as claimed in claim 32, wherein the measurement report is based on the signal-to-interference ratio (SIR) of the radio channel.

35. A cellular radio network as claimed in claim 32, wherein the measurement report is based on the cyclic redundancy check (CRC).

36. A computer program product encoding a computer program for execution in a processor of a controller for carrying out dynamic channel allocation in a cellular radio network comprising at least one base station (200A to 200B) and at least one terminal (202A to 202F) communicating over a radio connection with the base station (200A to 200B), wherein when the computer program is run on the processor, it provides the controller with:

    computer program means for grouping the terminals (202A to 202F) communicating over a radio connection with the base station (200A to 200B) of the cellular radio network into one or more terminal groups (406A to 406C), computer program means for forming a priority list (616A to 616B) for each terminal group (406A to 406C) of the radio channels in the cellular radio network from the highest quality channels as regards the terminal group (406A to 406C), and allocating one or more radio channels from the channels on the priority list (616A to 616B) to the terminal (202A to 202F),
    **characterized in that** the computer program means for grouping the terminals is configured to group the terminals into one or more terminal groups on the basis of the location of the terminals (202A to 202F).

**Patentansprüche**

1. Verfahren zum Ausführen einer dynamischen Kanalzuweisung in einem zellularen Funknetz, das mindestens eine Basisstation (200A bis 200B) und mindestens ein Endgerät (202A bis 202F) umfasst, das über eine Funkverbindung mit der Basisstation (200A bis 200B) kommuniziert, wobei das Verfahren Folgendes umfasst:

   Gruppieren der Endgeräte (202A bis 202F), die über eine Funkverbindung mit der Basisstation (200A bis 200B) des zellularen Funknetzes kommunizieren, in eine oder mehrere Endgerätegruppen (406A bis 406C),
   Bilden einer Prioritätenliste (616A bis 616B) der Funkanäle in dem zellularen Funknetz für jede Endgerätegruppe (406A bis 406C) aus den Kanälen mit der höchsten Qualität in Bezug auf die Endgerätegruppe (406A bis 406C) und Zuweisen eines oder mehrerer Funkkanäle von den Kanälen auf der Prioritätenliste (616A bis 616B) zu dem Endgerät (202A bis 202F),
   **dadurch gekennzeichnet, dass** die Endgeräte auf Basis des Standortes der Endgeräte (202A bis 202F) in eine oder mehrere Endgerätegruppen gruppiert werden.

2. Verfahren nach Anspruch 1, **gekennzeichnet durch** das Bilden der Prioritätenliste (616A bis 616B) für jede Endgerätegruppe (406A bis 406C) in der Uplink- und der Downlink-Richtung.

3. Verfahren nach Anspruch 1, **gekennzeichnet durch** das Bilden einer Kandidatenliste (616C bis 616D) für jede Endgerätegruppe (406A bis 406C) zum Führen eines oder mehrerer Kandidatenfunkkanäle.

4. Verfahren nach Anspruch 3, **gekennzeichnet durch** das Bilden einer Kandidatenliste (616C bis 616D) für jede Endgerätegruppe (406A bis 406C) in der Uplink- und der Downlink-Richtung.

5. Verfahren nach Anspruch 3, **gekennzeichnet durch** das Anordnen der auf der Uplink-Kandidatenliste (616C) geführten Funkkanäle auf der Grundlage der Empfangsleistung in einer Reihenfolge der Intensität, wobei die Empfangsleistung in der Basisstation (200A bis 200B) des zellularen Funknetzes gemessen wird.

6. Verfahren nach Anspruch 3, **gekennzeichnet durch** das Anordnen der auf der Uplink-Kandidatenliste (616C) geführten Funkkanäle auf der Grundlage der Empfangsleistung in einer Reihenfolge der Intensität, wobei die Empfangsleistung in einem oder mehreren Endgeräten (202A bis 202F) gemessen wird.

7. Verfahren nach Anspruch 1, **gekennzeichnet durch** das Führen der Prioritätenliste (616A bis 616B) der Endgerätegruppe (406A bis 406C) in der Basisstation (200A bis 200B) des zellularen Funknetzes.

8. Verfahren nach Anspruch 3, **gekennzeichnet durch** das Führen der Kandidatenliste (616C bis 616D) der Endgerätegruppe (406A bis 406C) in der Basisstation (200A bis 200B) des zellularen Funknetzes.

9. Verfahren nach Anspruch 1 und 4, **gekennzeichnet durch** das Ersetzen des Funkkanals, der von der Prioritätenliste (616A bis 616B) entfernt werden soll, **durch** den besten Kanal auf der Kandidatenliste (616C bis 616D).

10. Verfahren nach Anspruch 1 und 4, **gekennzeichnet durch** das Bewegen eines oder mehrerer Funkkanäle von der Kandidatenliste (616C bis 616D) zur Prioritätenliste (616A bis 616B), um die Anzahl verfügbarer Funkkanäle zu erhöhen.

11. Verfahren nach Anspruch 1, **gekennzeichnet durch** das Speichern eines oder mehrerer Funkkanäle der höchsten Qualität auf der Prioritätenliste (616A bis 616B) auf der Grundlage des erhaltenen Messberichts hinsichtlich der Nutzung des Funkkanals.

12. Verfahren nach Anspruch 11, **gekennzeichnet durch** das Bilden des Messberichts des Uplink-Funkkanals in der Basisstation (200A bis 200B).

13. Verfahren nach Anspruch 11, **gekennzeichnet durch** das Bilden des Messberichts des Downlink-Funkkanals in dem Endgerät.

14. Verfahren nach Anspruch 11, **gekennzeichnet durch** das Bilden eines Messberichts auf der Grundlage der negativen Quittierungen (NACK) der Pakete, die auf dem Funkkanalgesendet werden sollen.

**15.** Verfahren nach Anspruch 11, **gekennzeichnet durch** das Bilden eines Messberichts auf der Grundlage des Signal-Stör-Verhältnisses (SIR) des Funkkanals.

**16.** Verfahren nach Anspruch 11, **gekennzeichnet durch** das Bilden eines Messberichts auf der Grundlage der zyklischen Redundanzprüfung (CRC).

**17.** Verfahren nach Anspruch 11, **gekennzeichnet durch** das Bilden einer Bewertung auf der Grundlage des Messberichtes, ob der benutzte Funkkanal gut oder schlecht ist, und Berechnen eines Prioritätswertes auf dieser Grundlage für den Kanal nach der Formel $P_{i+1} = \dfrac{P_i x N_i + 1}{N_i + 1}$ wobei P den Kanalprioritätswert darstellt und N die Anzahl der Messberichte und I die laufende Nummer des Prioritätswertes und des Messberichts.

**18.** Verfahren nach Anspruch 11, **gekennzeichnet durch** das Einstellen eines Schwellenwertes für den Prioritätswert und das Entfernen des Kanals von der Prioritätenliste (616A bis 616B), dessen Prioritätswert unter den Schwellenwert sinkt.

**19.** Controller zum Ausführen einer dynamischen Kanalzuweisung in einem zellularen Funksystem, das mindestens eine Basisstation (200A bis 200B) und mindestens ein Endgerät (202A bis 202F) umfasst, das über eine Funkverbindung mit der Basisstation (200A bis 200B) kommuniziert, wobei der Controller (614), der in dem zellularen Funksystem enthalten ist, Folgendes aufweist:

Mittel zum Gruppieren des einen oder der mehreren Endgeräte (202A bis 202F), die über eine Funkverbindung mit der Basisstation (200A bis 200B) des zellularen Funksystems kommunizieren, in eine oder mehrere Endgerätegruppen (406A bis 406C),
Mittel zum Bilden einer Prioritätenliste (616A bis 616B) der Funkkanäle in dem zellularen Funknetz für jede Endgerätegruppe (406A bis 406C) aus den Kanälen mit der höchsten Qualität in Bezug auf die Endgerätegruppe (406A bis 406C) und
Mittel zum Zuweisen eines oder mehrerer Funkkanäle von den Kanälen auf der Prioritätenliste (616A bis 616B) zu dem Endgerät (202A bis 202F),
**dadurch gekennzeichnet, dass** das Gruppierungsmittel dafür konfiguriert ist, das eine oder die mehreren Endgeräte auf Basis des Standortes der Endgeräte (202A bis 202F) in eine oder mehrere Endgerätegruppen zu gruppieren.

**20.** Controller nach Anspruch 19, **dadurch gekennzeichnet, dass** der Controller (614) Mittel zum Bilden einer Prioritätenliste (616A bis 616B) für jede Endgerätegruppe (406A bis 406C) in der Uplink- und der Downlink-Richtung umfasst.

**21.** Controller nach Anspruch 19, **dadurch gekennzeichnet, dass** der Controller (614) Mittel zum Bilden einer Kandidatenliste (616C bis 616D) für jede Endgerätegruppe (406A bis 406C) zum Führen eines oder mehrerer Kandidatenfunkkanäle umfasst.

**22.** Controller nach Anspruch 21, **dadurch gekennzeichnet, dass** der Controller (614) Mittel zum Bilden einer Kandidatenliste (616C bis 616D) für jede Endgerätegruppe (406A bis 406C) in der Uplink- und der Downlink-Richtung umfasst.

**23.** Controller nach Anspruch 21, **dadurch gekennzeichnet, dass** der Controller (614) Mittel zum Anordnen der auf der Uplink-Kandidatenliste (616C) geführten Funkkanäle auf der Grundlage der Empfangsleistung in einer Reihenfolge der Intensität umfasst, wobei die Basisstation (200A bis 200B) des zellularen Funknetzes Mittel zum Messen der Empfangsleistung umfasst.

**24.** Controller nach Anspruch 21, **dadurch gekennzeichnet, dass** der Controller (614) Mittel zum Anordnen der auf der Downlink-Kandidatenliste (616D) geführten Funkkanäle auf der Grundlage der Empfangsleistung in einer Reihenfolge der Intensität umfasst, wobei die Empfangsleistung in einem oder mehreren Endgeräten (202A bis 202F) gemessen wird.

**25.** Controller nach Anspruch 21, **dadurch gekennzeichnet, dass** die Basisstation (200A bis 200B) Mittel zum Führen der Prioritätenliste (616A bis 616B) der Endgerätegruppe (406A bis 406C) umfasst.

**26.** Controller nach Anspruch 21, **dadurch gekennzeichnet, dass** die Basisstation (200A bis 200B) Mittel zum Führen der Kandidatenliste (616C bis 616D) der Endgerätegruppe (406A bis 406C) umfasst.

**27.** Controller nach Anspruch 19 und 21, **dadurch gekennzeichnet, dass** der Controller (614) Mittel zum Ersetzen des Funkkanals, der von der Prioritätenliste (616A bis 616B) entfernt wird, durch den besten Kanal auf der Kandidatenliste (616C bis 616D) umfasst.

**28.** Controller nach Anspruch 19 und 21, **dadurch gekennzeichnet, dass** der Controller (614) Mittel zum Bewegen eines oder mehrerer Funkkanäle von der Kandidatenliste (616C bis 616D) zur Prioritätenliste (616A bis 616B), um die Anzahl verfügbarer Funkkanäle zu erhöhen, umfasst.

**29.** Controller nach Anspruch 19, **dadurch gekennzeichnet, dass** der Controller (614) Mittel zum Führen eines oder mehrerer Funkkanäle der höchsten Qualität auf der Prioritätenliste (616A bis 616B) auf der Grundlage des erhaltenen Messberichts hinsichtlich der Nutzung des Funkkanals umfasst.

**30.** Controller nach Anspruch 29, **dadurch gekennzeichnet, dass** der Controller (614) Mittel zum Bilden einer Bewertung auf der Grundlage des Messberichtes, ob der eingesetzte Funkkanal gut oder schlecht ist, und Mittel zum Berechnen eines Prioritätswertes auf dieser Grundlage für den Kanal nach der Formel $P_{i+1} = \dfrac{P_i x N_i + 1}{N_i + 1}$ umfasst, wobei P den Kanalprioritätswert darstellt und N die Anzahl der Messberichte und i die laufende Nummer des Prioritätswertes und des Messberichts.

**31.** Controller nach Anspruch 30, **dadurch gekennzeichnet, dass** der Controller (614) Mittel zum Einstellen eines Schwellenwertes für den Prioritätswert und Mittel zum Entfernen des Kanals von der Prioritätenliste (616A bis 616B) umfasst, dessen Prioritätswert unter den Schwellenwert sinkt.

**32.** Zellulares Funknetz, das einen Controller nach Anspruch 29 und eine Basisstation umfasst, wobei die Basisstation (200A bis 200B) Mittel zum Bilden des Messberichts des Uplink-Funkkanals umfasst.

**33.** Zellulares Funknetz nach Anspruch 32, wobei der Messbericht auf den negativen Quittierungen (NACK) der Pakete basiert, die auf dem Funkkanal gesendet werden sollen.

**34.** Zellulares Funknetz nach Anspruch 32, wobei der Messbericht auf dem Signal-Stör-Verhältnis (SIR) des Funkkanals basiert.

**35.** Zellulares Funknetz nach Anspruch 32, wobei der Messbericht auf der zyklischen Redundanzprüfung (CRC) basiert.

**36.** Computerprogrammprodukt, das ein Computerprogramm zum Ausführen in einem Prozessor eines Computers zum Durchführen einer dynamischen Kanalzuweisung in einem zellularen Funknetz codiert, das mindestens eine Basisstation (200A bis 200B) und mindestens ein Endgerät (202A bis 202F) umfasst, das über eine Funkverbindung mit der Basisstation (200A bis 200B) kommuniziert, wobei das Computerprogramm, wenn es auf dem Prozessor ausgeführt wird, für den Controller Folgendes bereitstellt:

Computerprogrammmittel zum Gruppieren der Endgeräte (202A bis 202F), die über eine Funkverbindung mit der Basisstation (200A bis 200B) des zellularen Funknetzes kommunizieren, in eine oder mehrere Endgerätegruppen (406A bis 406C),
Computerprogrammmittel zum Bilden einer Prioritätenliste (616A bis 616B) der Funkkanäle in dem zellularen Funknetz für jede Endgerätegruppe (406A bis 406C) aus den Kanälen mit der höchsten Qualität in Bezug auf die Endgerätegruppe (406A bis 406C) und Zuweisen eines oder mehrerer Funkkanäle von den Kanälen auf der Prioritätenliste (616A bis 616B) zu dem Endgerät (202A bis 202F),
**dadurch gekennzeichnet, dass** das Computerprogrammmittel zum Gruppieren der Endgeräte dafür konfiguriert ist, die Endgeräte auf der Grundlage des Standortes der Endgeräte (202A bis 202F) in eine oder mehrere Endgerätegruppen zu gruppieren.

**EP 1 238 560 B1**

**Revendications**

1. Procédé pour réaliser une attribution dynamique de canaux dans un réseau de radiocommunication cellulaire comprenant au moins une station de base (200A à 200B) et au moins un terminal (202A à 202F) communiquant sur une liaison radio avec la station de base (200A à 200B), le procédé comprenant les étapes consistant à :

   regrouper les terminaux (202A à 202F) communiquant sur une liaison radio avec la station de base (200A à 200B) du réseau de radiocommunication cellulaire en un ou plusieurs groupes de terminaux (406A à 406C), former une liste prioritaire (616A à 616B) pour chaque groupe de terminaux (406A à 406C) des canaux radio dans le réseau de radiocommunication cellulaire à partir des canaux de la plus haute qualité en ce qui concerne le groupe de terminaux (406A à 406C), et attribuer un ou plusieurs canaux radio à partir des canaux sur la liste prioritaire (616A à 616B) au terminal (202A à 202F),
   **caractérisé en ce que** les terminaux sont regroupés en un ou plusieurs groupes de terminaux sur la base de la localisation des terminaux (202A à 202F).

2. Procédé selon la revendication 1, **caractérisé par** l'étape consistant à former la liste prioritaire (616A à 616B) pour chaque groupe de terminaux (406A à 406C) dans la direction des liaisons montantes et liaisons descendantes.

3. Procédé selon la revendication 1, **caractérisé par** l'étape consistant à former une liste de candidats (616C à 616D) pour chaque groupe de terminaux (406A à 406C) pour maintenir un ou plusieurs canaux radio candidats.

4. Procédé selon la revendication 3, **caractérisé par** l'étape consistant à former une liste de candidats (616C à 616D) pour chaque groupe de terminaux (406A à 406C) dans la direction des liaisons montantes et liaisons descendantes.

5. Procédé selon la revendication 3, **caractérisé par** l'étape consistant à agencer les canaux radio maintenus sur la liste de candidats en liaison montante (616C) sur la base de la puissance de réception dans un ordre d'intensité, la puissance de réception étant mesurée dans la station de base (200A à 200B) du réseau de radiocommunication cellulaire.

6. Procédé selon la revendication 3, **caractérisé par** l'étape consistant à agencer les canaux radio maintenus sur la liste de candidats en liaison montante (616C) sur la base de la puissance de réception dans un ordre d'intensité, la puissance de réception étant mesurée dans un ou plusieurs terminaux (202A à 202F).

7. Procédé selon la revendication 1, **caractérisé par** l'étape consistant à maintenir la liste prioritaire (616A à 616B) du groupe de terminaux (406A à 406C) dans la station de base (200A à 200B) du réseau de radiocommunication cellulaire.

8. Procédé selon la revendication 3, **caractérisé par** l'étape consistant à maintenir la liste de candidats (616C à 616D) du groupe de terminaux (406A à 406C) dans la station de base (200A à 200B) du réseau de radiocommunication cellulaire.

9. Procédé selon les revendications 1 et 4, **caractérisé par** l'étape consistant à remplacer le canal radio qui doit être retiré de la liste prioritaire (616A à 616B) par le meilleur canal sur la liste de candidats (616C à 616D).

10. Procédé selon les revendications 1 et 4, **caractérisé par** l'étape consistant à déplacer un ou plusieurs canaux radio de la liste de candidats (616C à 616D) à la liste prioritaire (616A à 616B) afin d'augmenter le nombre de canaux radio disponibles.

11. Procédé selon la revendication 1, **caractérisé par** l'étape consistant à stocker un ou plusieurs canaux radio de la plus haute qualité sur la liste prioritaire (616A à 616B) sur la base du rapport de mesure obtenu concernant l'utilisation du canal radio.

12. Procédé selon la revendication 11, **caractérisé par** l'étape consistant à former le rapport de mesure du canal radio en liaison montante dans la station de base (200A à 200B).

13. Procédé selon la revendication 11, **caractérisé par** l'étape consistant à former le rapport de mesure du canal radio en liaison descendante dans le terminal.

**14.** Procédé selon la revendication 11, **caractérisé par** l'étape consistant à former un rapport de mesure sur la base des accusés de réception négatifs (NACK) des paquets qui doivent être envoyés sur le canal radio.

**15.** Procédé selon la revendication 11, **caractérisé par** l'étape consistant à former un rapport de mesure sur la base du rapport signal utile / signal brouilleur (SIR) du canal radio.

**16.** Procédé selon la revendication 11, **caractérisé par** l'étape consistant à former un rapport de mesure sur la base du contrôle de redondance cyclique (CRC).

**17.** Procédé selon la revendication 11, **caractérisé par** l'étape consistant à former une évaluation sur la base du rapport de mesure, permettant de savoir si le canal radio utilisé est de bonne ou de mauvaise qualité, et à calculer sur ladite base une valeur de priorité pour le canal en utilisant la formule $P_{i+1} = \dfrac{P_i \times N_i + 1}{N_i + 1}$ où P représente la valeur de priorité de canal et N le nombre de rapports de mesure et I le numéro consécutif de la valeur de priorité et du rapport de mesure.

**18.** Procédé selon la revendication 11, **caractérisé par** l'étape consistant à fixer une valeur seuil pour la valeur de priorité et à retirer de la liste prioritaire (616A à 616B) le canal dont la valeur de priorité descend sous la valeur de seuil.

**19.** Contrôleur pour réaliser une attribution dynamique de canaux dans un système de radiocommunication cellulaire comprenant au moins une station de base (200A à 200B) et au moins un terminal (202A à 202F) communiquant sur une liaison radio avec la station de base (200A à 200B), le contrôleur (614) inclus dans le système de radiocommunication cellulaire comprenant :

des moyens pour regrouper lesdits un ou plusieurs terminaux (202A à 202F) communiquant sur une liaison radio avec la station de base (200A à 200B) du système de radiocommunication cellulaire en un ou plusieurs groupes de terminaux (406A à 406C),
des moyens pour former une liste prioritaire (616A-616B) pour chaque groupe de terminaux (406A à 406C) des canaux radio dans le réseau de radiocommunication cellulaire à partir des canaux de la plus haute qualité en ce qui concerne le groupe de terminaux (406A à 406C), et
des moyens pour attribuer un ou plusieurs canaux radio à partir des canaux sur la liste prioritaire (616A à 616B) au terminal (202A à 202F),
**caractérisé en ce que** les moyens de regroupement sont configurés pour grouper les un ou plusieurs terminaux en un ou plusieurs groupes de terminaux sur la base de la localisation des terminaux (202A à 202F).

**20.** Contrôleur selon la revendication 19, **caractérisé en ce que** le contrôleur (614) comprend des moyens pour former une liste prioritaire (616A à 616B) pour chaque groupe de terminaux (406A à 406C) dans les directions des liaisons montantes et liaisons descendantes.

**21.** Contrôleur selon la revendication 19, **caractérisé en ce que** le contrôleur (614) comprend des moyens pour former une liste de candidats (616C à 616D) pour chaque groupe de terminaux (406A à 406C) pour maintenir un ou plusieurs canaux radio candidats.

**22.** Contrôleur selon la revendication 21, **caractérisé en ce que** le contrôleur (614) comprend des moyens pour former une liste de candidats (616C à 616D) pour chaque groupe de terminaux (406A à 406G) dans les directions des liaisons montantes et liaisons descendantes.

**23.** Contrôleur selon la revendication 21, **caractérisé en ce que** le contrôleur (614) comprend des moyens pour agencer les canaux radio maintenus sur la liste de candidats en liaison montante (616C) sur la base de la puissance de réception dans un ordre d'intensité, dans lequel la station de base (200A à 200B) du réseau de radiocommunication cellulaire comprend des moyens pour mesurer la puissance de réception.

**24.** Contrôleur selon la revendication 21, **caractérisé en ce que** le contrôleur (614) comprend des moyens pour agencer les canaux radio maintenus sur la liste de candidats en liaison descendante (616D) sur la base de la puissance de réception dans un ordre d'intensité, et la puissance de réception est mesurée dans un ou plusieurs terminaux (202A à 202F).

**25.** Contrôleur selon la revendication 21, **caractérisé en ce que** la station de base (200A à 200B) comporte des moyens pour maintenir la liste prioritaire (616A à 616B) du groupe de terminaux (406A à 406C).

**26.** Contrôleur selon la revendication 21, **caractérisé en ce que** la station de base (200A à 200B) comporte des moyens pour maintenir la liste de candidats (616C à 616D) du groupe de terminaux (406A à 406C).

**27.** Contrôleur selon les revendications 19 et 21, **caractérisé en ce que** le contrôleur (614) comprend des moyens pour remplacer le canal radio retiré de la liste prioritaire (616A à 616B) par le meilleur canal sur la liste de candidats (616C à 616D).

**28.** Contrôleur selon les revendications 19 et 21, **caractérisé en ce que** le contrôleur (614) comprend des moyens pour déplacer un ou plusieurs canaux radio de la liste de candidats (616C à 616D) à la liste prioritaire (616A à 616B) afin d'augmenter la nombre de canaux radio disponibles.

**29.** Contrôleur selon la revendication 19, **caractérisé en ce que** le contrôleur (614) comprend des moyens pour maintenir un ou plusieurs canaux radio de la plus haute qualité sur la liste prioritaire (616A à 616B) sur la base du rapport de la mesure obtenue concernant l'utilisation du canal radio.

**30.** Contrôleur selon la revendication 29, **caractérisé en ce que** le contrôleur (614) comprend des moyens pour former une évaluation, sur la base du rapport de mesure, permettant de savoir si le canal radio utilisé est de bonne ou de mauvaise qualité et des moyens pour calculer sur ladite base une valeur de priorité pour le canal à l'aide de la formule $P_{i+1} = \dfrac{P_i \times N_i + 1}{N_i + 1}$ où P représente la valeur de priorité de canal et N le nombre de rapports de mesure et I le numéro consécutif de la valeur de priorité et du rapport de mesure.

**31.** Contrôleur selon la revendication 30, **caractérisé en ce que** le contrôleur (614) comprend des moyens pour fixer une valeur seuil pour la valeur de priorité et des moyens pour retirer de la liste prioritaire (616A à 616B) le canal dont la valeur de priorité descend en dessous de la valeur seuil.

**32.** Réseau de radiocommunication cellulaire, comprenant un contrôleur selon la revendication 29 et une station de base, dans lequel la station de base (200A à 200B) comporte des moyens pour former le rapport de mesure du canal radio en liaison montante.

**33.** Réseau de radiocommunication cellulaire selon la revendication 32, dans lequel le rapport de mesure est établi sur la base des accusés de réception négatifs (NACK) des paquets qui doivent être envoyés sur le canal radio.

**34.** Réseau de radiocommunication cellulaire selon la revendication 32, dans lequel le rapport de mesure est établi sur la base du rapport signal utile / signal brouilleur (SIR) du canal radio.

**35.** Réseau de radiocommunication cellulaire selon la revendication 32, dans lequel le rapport de mesure est établi sur la base du contrôle de redondance cyclique (CRC).

**36.** Produit programme informatique codant un programme informatique pour une exécution dans un processeur d'un contrôleur pour la réalisation d'une attribution dynamique de canaux dans un réseau de radiocommunication cellulaire comprenant au moins une station de base (200A à 200B) et au moins un terminal (202A à 202F) communiquant sur une liaison radio avec la station de base (200A à 200B), dans lequel lorsque le programme informatique est exécuté sur le processeur, il fournit au contrôleur :

des moyens de programme informatique pour regrouper les terminaux (202A à 202F) communiquant sur une liaison radio avec la station de base (200A à 200B) du réseau de radiocommunication cellulaire en un ou plusieurs groupes de terminaux (406A à 406C),
des moyens de programme informatique pour former une liste prioritaire (616A à 616B) pour chaque groupe de terminaux (406A à 406C) des canaux radio dans le réseau de radiocommunication cellulaire à partir des canaux de la plus haute qualité en ce qui concerne le groupe de terminaux (406A à 406C), et pour attribuer un ou plusieurs canaux radio à partir des canaux sur la liste prioritaire (616A à 616B) au terminal (202A à 202F),

**caractérisé en ce que** les moyens de programme informatique pour regrouper les terminaux sont configurés pour regrouper les terminaux en un ou plusieurs groupes de terminaux sur la base de la localisation des terminaux (202A à 202F).

EP 1 238 560 B1

Fig. 1

Fig. 2A

19

Fig. 2B

300 START

302 DETERMINING LOCATION OF MOBILES

304 GROUPING MOBILES INTO MOBILE GROUPS
ACCORDING TO LOCATION

306 END

Fig. 3A

```
                    ┌─────────────────┐
                    │   310 START     │
                    └─────────────────┘
                             │
                             ▼
              ┌──────────────────────────┐
              │   312 WAITING FOR        │ ◄──────────────────────┐
          ┌──►│     MEASUREMENT          │                        │
          │   │   REPORT FROM MS         │                        │
          │   └──────────────────────────┘                        │
          │                │                                      │
          │                ▼                                      │
          │   ┌──────────────────────┐   ┌──────────────────────┐ │
          │   │  314 RECEIVING A     │   │  326 REPLACING THE   │ │
          │   │ MEASUREMENT REPORT   │   │  CHANNEL WITH THE    │ │
          │   │ ON THE INTERFERENCE  │   │  BEST AVAILABLE      │ │
          │   │ EXPERIENCED BY THE MS│   │ CHANNEL FROM THE     │ │
          │   └──────────────────────┘   │  CANDIDATE LIST      │ │
          │                │             └──────────────────────┘ │
          │                ▼                         ▲            │
          │          ◇─────────────◇    ┌──────────────────────┐  │
          │         ╱ 316 QUALITY   ╲   │ 322 DECREASING THE   │  │
          │        ╱  OF THE         ╲  │  PRIORITY OF THE     │  │
          │        ╲ CHANNEL IS GOOD?╱──NO──►│     CHANNEL      │  │
          │         ╲               ╱   └──────────────────────┘  │
          │          ◇─────────────◇                │            │
          │                │                        ▼           YES
          │               YES                 ◇─────────────◇    │
          │                ▼                 ╱  324 PRIORITY  ╲   │
          │   ┌──────────────────────┐      ╱ BELOW THRESHOLD  ╲──┘
          │   │ 318 INCREASING THE   │      ╲     VALUE?       ╱
          │   │  PRIORITY OF THE     │       ◇─────────────◇
          │   │     CHANNEL          │              │
          │   └──────────────────────┘              │
          │                │                        │
          │                ▼                        │
          │   ┌──────────────────────┐              │
          │   │ 320 UPDATING THE UPLINK │◄───NO─────┘
          └───│  PRIORITY LIST OF THE   │
              │    MOBILE GROUP         │
              └──────────────────────┘
                             │
                             ▼
                    ┌─────────────────┐
                    │   328 END       │
                    └─────────────────┘
```

Fig. 3B

```
                    ┌─────────────────┐
                    │   340 START     │
                    └────────┬────────┘
                             │
                             ▼
      ┌──────────────────────────────────────────────────┐
      │ 342 MEASURING SIGNAL STRENGTH ON AN IDLE UPLINK   │◄──┐
      │                    CHANNEL                        │   │
      └──────────────────────┬───────────────────────────┘   │
                             │                                │
                             ▼                                │
      ┌──────────────────────────────────────────────────┐   │
      │ 344 CALCULATING WEIGHTED AVERAGE OF SIGNAL        │   │
      │          STRENGTHS ON THE CHANNEL                 │   │
      └──────────────────────┬───────────────────────────┘   │
                             │                                │
                             ▼                                │
      ┌──────────────────────────────────────────────────┐   │
      │ 346 UPDATING CANDIDATE CHANNEL LIST TO WHICH      │───┘
      │          THE CHANNEL BELONGS                      │
      └──────────────────────┬───────────────────────────┘
                             │
                             ▼
                    ┌─────────────────┐
                    │   348 END       │
                    └─────────────────┘
```

Fig. 3C

23

Fig. 4

EP 1 238 560 B1

Fig.5

F3, F4

500C

200B

500B

406C

202F

202E

406B

202D

202C

F1, F2

200A

500A

202B

406A

202A

25

Fig. 6

EP 1 238 560 B1

**EP 1 238 560 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0666699 A
- EP 0666999 A

- US 5448750 A